# EUROPÄISCHE PATENTSCHRIFT

(11) **EP 3 684 171 B1**
(45) Veröffentlichungstag und Bekanntmachung des Hinweises auf die Patenterteilung: **08.12.2021**
(21) Anmeldenummer: 18811705.5
(22) Anmeldetag: 20.10.2018
(51) Int. Cl.: A01K 27/00

(54) **AUFROLLVORRICHTUNG FÜR EINE TIERLEINE**
REELING DEVICE FOR AN ANIMAL LINE
DISPOSITIF D'ENROULEMENT POUR UNE LIGNE D'ANIMAUX

(30) Priorität: 25.10.2017 DE 102017125015
(43) Veröffentlichungstag der Anmeldung: 29.07.2020
(73) Patentinhaber: Möller, Wolfgang, 44797 Bochum (DE)
(72) Erfinder: Möller, Wolfgang, 44797 Bochum (DE)
(74) Vertreter: Schneiders & Behrendt Bochum
(86) Internationale Anmeldenummer: PCT/DE2018/000303
(87) Internationale Veröffentlichungsnummer: WO 2019/080954

(56) Entgegenhaltungen:
- CN-Y- 201 308 048
- JP-A- 2003 274 787
- US-A1- 2014 033 991
- US-A1- 2014 165 925

## Beschreibung

Die Erfindung betrifft eine Aufrollvorrichtung für eine Tierleine, insbesondere für eine Hundeleine, mit einem die Leine aufnehmenden Gehäuse, welches mit einer Ausziehbegrenzungseinrichtung und mit einem eine Eingriffsöffnung aufweisenden Haltering versehen ist, der einen verschwenkbaren Halteringbügel aufweist, der über ein Schwenkgelenk mit dem Haltering verbunden ist, in seiner nicht verschwenkten Stellung die Eingriffsöffnung des Halteringes abschließt und in seiner verschwenkten Stellung die Eingriffsöffnung des Halteringes freigibt. Eine derartige Aufrollvorrichtung ist beispielsweise aus dem deutschen Gebrauchsmuster DE-U-85 27 780 bekannt.

Aufrollvorrichtungen für Hundeleinen mit einer Ausziehbegrenzungseinrichtung haben sich in der jüngeren Vergangenheit außerordentlich gut bewährt und sind dementsprechend in vielfältigen Ausführungsformen und mit verschiedenen Zusatzeinrichtungen (z. B. Leuchten, akustischen Signalgebern, Kotbeutelvorrat etc.) erhältlich. Der besondere Vorteil von solchen Aufrollvorrichtungen besteht zunächst darin, dass man den Hund mithilfe der Ausziehbegrenzungseinrichtung wahlweise an langer Leine oder auch an sehr kurzer Leine führen kann.

Die Aufrolleinrichtung der eingangs genannten Art bietet darüber hinaus die Möglichkeit einer einfachen und sicheren Befestigung der Aufrolleinrichtung an beliebigen Befestigungspunkten, z. B. An Ringen oder Stangen vor Ladengeschäften oder an Gittern, Zäunen, Möbelstücken, Parkbänken etc., wo der angeleinte Hund zeitweise verbleiben soll.

Hierzu ist der Haltering des Gehäuses mit einem verschwenkbaren Halteringbügel versehen, der über ein Schwenkgelenk mit dem Haltering verbunden ist, in seiner nicht verschwenkten Stellung (Schließstellung) die Eingriffsöffnung des Halteringes abschließt und in seiner verschwenkten Stellung (Öffnungsstellung) die Eingriffsöffnung des Halteringes freigibt. Ein derart ausgebildeter Haltering kann nach Verschwenken seines Halteringbügels in die Öffnungsstellung mit seiner Eingriffsöffnung beliebig über geeignete Befestigungsstellen gehängt werden und dort durch Zurückschwenken des Halteringbügels nach Art eines Karabinerhakens gesichert werden.

Ein besonderes Problem ergibt sich, wenn der an der Aufrollvorrichtung geführte Hund in einem Kfz mitgenommen werden soll. Nach den einschlägigen Vorschriften der Straßenverkehrsordnung muss nämlich sichergestellt sein, dass ein im Fahrzeug mitgeführter Hund den Fahrzeugführer nicht behindern oder ablenken kann. Jeder Verstoß gegen diese Sicherungspflicht wird nach den einschlägigen Vorschriften mit einem Ordnungsgeld und einem Eintrag im Fahreignungsregister geahndet. Aus diesem Grund ist es entweder üblich, den Hund in einem mitgeführten Käfig oder Käfigabteil des Kraftfahrzeuges einzusperren oder den Hund mit einem geeigneten Halsband oder besser noch einem Brustgeschirr im Bereich der Rückbank des Fahrzeuges anzuschnallen. Solche Anschnallsysteme sind beispielsweise aus der US 5 443 037 A oder der DE 101 19 581 C2 bekannt.

Bekannt sind in diesem Zusammenhang insbesondere auch gesonderte Adapter, die zwischen dem Halsband oder dem Brustgeschirr des Hundes einerseits und dem Gurtschloss eines Kfz-Rückhaltesystems andererseits angeordnet werden und an einem Ende mit Verbindungsmitteln zum Befestigen am Halsband oder Brustgeschirr des Hundes und am anderen Ende mit einer Schlosszunge zum Einstecken in ein im Fahrzeug befindliches, und nach den gesetzlichen Vorschriften ohnehin vorhandenes Gurtschloss versehen ist.

Nachteilig an solchen gesonderten Adaptern ist, dass sie bei jeder anderweitigen Verwendung des Schlosses, z. B. Bei der Mitnahme von Passagieren auf der Rückbank, abgenommen werden müssen und dementsprechend leicht verloren gehen können oder schwer auffindbar im Fahrzeug verlegt werden. Infolgedessen kommt es verhältnismäßig oft vor, dass Hunde im Kfz mitgenommen werden, ohne vorschriftsmäßig gesichert zu sein.

Das zuletzt genannte Problem tritt nicht auf, wenn - wie aus der CN 201 308 048 Y bekanntzusätzlich außen an dem Gehäuse der Aufrollvorrichtung eine in das Gurtschloss eines Fahrzeuges einsteckbare Schlosszunge vorgesehen wird, die über einen kurzen Befestigungsgurt mit dem Gehäuse verbunden ist. Diese ständig heraushängende Schlosszunge stört allerdings beim normalen Gebrauch der Aufrollvorrichtung und kann unter Umständen sogar gefährlich werden, wenn die offene Schlosszunge an Gegenständen oder Vorsprüngen hängenbleibt.

Schließlich ist aus der US 2014/165 925 A1 eine Aufrollvorrichtung für eine Hundeleine bekannt, deren Gehäuse einen starr mit dem Gehäuse verbundenen Haltering und zusätzlich einen gesonderten Seitenraum für die Aufnahme einer seitlich herausschwenkbaren Schlosszunge aufweist, die in das Gurtschloss eines Fahrzeuges einsteckbar ist. Diese Unterbringung der Schlosszunge in einem Seitenraum des Gehäuses verursacht allerdings ein entsprechend vergrößertes Gehäusevolumen und ist deshalb wenig raumsparend.

Es ist deshalb Aufgabe der Erfindung, bei einer Aufrollvorrichtung mit aufschwenkbarem Haltegriff für eine besonders raumsparende Integration der Schlosszunge in den Haltegriff zu sorgen, ohne dessen eigentliche Funktion zu beeinträchtigen.

Gegenstand der Erfindung ist eine Aufrollvorrichtung für eine Tierleine, insbesondere für eine Hundeleine, mit einem die Leine aufnehmenden Gehäuse, welches mit einer Ausziehbegrenzungseinrichtung und mit einem eine Eingriffsöffnung aufweisenden Haltering versehen ist, der einen verschwenkbaren Halteringbügel aufweist, der über ein Schwenkgelenk mit dem Haltering verbunden ist, in seiner nicht verschwenkten Stellung die Eingriffsöffnung des Halteringes abschließt und in seiner verschwenkten Stellung die Eingriffsöffnung des Halteringes freigibt, wobei sich diese Aufrollvorrichtung dadurch kennzeichnet, dass an dem Halteringbügel an seinem dem Schwenkgelenk abgewandten Ende oder an dem Haltering an seinem dem Halteringbügel zugewandten Ende eine Schlosszunge angeordnet ist, welche bei geöffnetem Haltering in ein Kfz-Gurtschloss einsteckbar ist.

Die Erfindung ermöglicht es erstmals, die Aufrollvorrichtung unmittelbar mit dem Gurtschloss des nach den gesetzlichen Vorschriften ohnehin vorhandenen Rückhaltesystems des Fahrzeuges zu verbinden und somit den Hund nach den gesetzlichen Vorschriften ausreichend kurz angeleint zu sichern, und zwar ohne gesonderten Adapter o. ä. Einrichtungen. Die neue Aufrollvorrichtung hat somit eine zusätzliche Funktion, welche die Hundehaltung außerordentlich erleichtert. Insbesondere eröffnet die neue Aufrollvorrichtung auch die Möglichkeit, den Hund im Bedarfsfall in einem Fahrzeug mitzunehmen, wenn sonst keinerlei besondere Vorrichtungen für die Tiersicherung vorhanden sind. Die erfindungsgemäß geschlagene besondere Anordnung der Schlosszunge an den Teilen des Halteringes ermöglicht eine besonders raumsparende Integration der Schlosszunge in den Haltering, ohne dessen eigentliche Funktion zu beeinträchtigen.

Eine besonders bevorzugte Ausführungsform der Erfindung sieht vor, dass die Schlosszunge in Umfangsrichtung des Halteringes verläuft und bei geschlossenem Haltering in einer passenden Vertiefung des Halteringes bzw. des Halteringbügels liegt. Hierdurch ist es möglich, die Schlosszunge so in den Haltering zu integrieren, dass sie nirgendwo störend über dessen Konturen vorsteht und auch keinen zusätzlichen Raum für ihre Unterbringung benötigt.

Zweckmäßig ist weiterhin vorgesehen, dass der Halteringbügel in Bezug auf die Eingriffsöffnung des Halteringes nach außen verschwenkbar ist. Hierdurch wird einerseits die Befestigung des Halteringes an beliebigen Befestigungspunkten erleichtert und außerdem für eine gute Zugänglichkeit der mit dem Haltering verbundenen Schlosszunge gesorgt.

Für die sichere Fixierung des Halteringes an beliebigen Befestigungspunkten ist vorgesehen, dass der Halteringbügel an seinem dem Schwenkgelenk abgewandten Ende mit einem Verriegelungselement versehen ist, mit welchem der Halteringbügel in der Schließstellung fixierbar ist. Diese Verriegelung sorgt dafür, dass sich der Haltering nicht zur Unzeit, z. B. Bei heftigen Bewegungen des Hundes von dem Befestigungspunkt lösen kann.

Um die Handhabung der neuen Aufrollvorrichtung zu vereinfachen, ist weiterhin vorgesehen, dass das den Halteringbügel tragende Gelenk als Federgelenk ausgebildet ist, welches den Haltering elastisch in der Öffnungsstellung hält. Dieses Federgelenk hält den Halteringbügel während des Befestigungsvorganges in der Öffnungsstellung und erleichtert somit für den Benutzer die Befestigung sowohl an beliebigen Befestigungspunkten als auch an einem Kfz-Gurtschloss. Für das Schließen des Haltering des drückt der Benutzer bei dieser Ausgestaltung der Aufrollvorrichtung gegen die Federkraft in die Schließstellung, in welcher die oben erwähnte Verriegelung stattfindet.

Schließlich ist vorgesehen, dass das Verriegelungselement am Ende des Halteringbügels als federbelasteter Schnappriegel ausgebildet ist, der mit Griffelementen zum Öffnen von Hand versehen ist. Dieser Schnappriegel rastet am Ende des Schließweges des Halteringbügels automatisch ein und kann durch Zurückziehen von Hand entriegelt werden, wonach der Halteringbügel durch Einwirkung des oben erwähnten Federgelenkes in die für die oben erläuterten Befestigungsvorgänge notwendige Öffnungsstellung springt.

Zwei Ausführungsbeispiele der Erfindung werden im Folgenden anhand der Zeichnung näher erläutert. Es zeigen:
- Figur 1:: Schematisch eine Seitenansicht einer Aufrollvorrichtung gemäß der Erfindung in einer ersten Ausführungsform;
- Figur 2:: Eine Draufsicht auf den Verriegelungsbereich zwischen Haltering und Halteringbügel der in Figur 1 dargestellten Aufrollvorrichtung;
- Figur 3:: Eine Seitenansicht einer Aufrollvorrichtung gemäß der Erfindung in einer zweiten Ausführungsform;
- Figur 4:: Perspektivisch die in Figur 3 dargestellte Aufrollvorrichtung in der geöffneten Stellung.

In der Zeichnung ist das Gehäuse einer Aufrollvorrichtung mit dem Bezugszeichen 1 bezeichnet. In dem Gehäuse 1 befindet sich einer Aufwickelrolle 2, auf welche eine Hundeleine 3 aufgewickelt ist, die seitlich aus dem Gehäuse 1 herausgeführt ist. Weiterhin weist das Gehäuse eine in der Zeichnung nicht dargestellte Ausziehbegrenzungseinrichtung auf, mit welcher es möglich ist, die Ausziehlänge der Hundeleine von Hand beliebig zu fixieren.

An seiner der Austrittsöffnung der Hundeleine 3 abgewandten Seite ist das Gehäuse 1 mit einem Haltering 4 versehen, der eine Eingriffsöffnung 5 umschließt. Dieser Haltering 4 weist einen Halteringbügel 4a auf, der über ein Schwenkgelenk 6 mit dem Gehäuse 1 verbunden ist, welches gemeinsam mit dem Halteringbügel 4a die Eingriffsöffnung 5 umschließt und somit den Haltering 4 bildet. Um dieses Schwenkgelenk 6 herum ist der Halteringbügel 4a in Richtung des Pfeiles 7 in eine Öffnungsstellung verschwenkbar, in welcher die Eingriffsöffnung 5 nach einer Seite hin offen ist und eine Art Haken bildet, der zur Befestigung des Gehäuses 1 an beliebigen Befestigungspunkten verwendet werden kann und dessen Hakenöffnung durch den schwenkbaren Halteringbügel 4a verschlossen werden kann, um das Gehäuse an einen beliebigen Befestigungspunkt zu sichern.

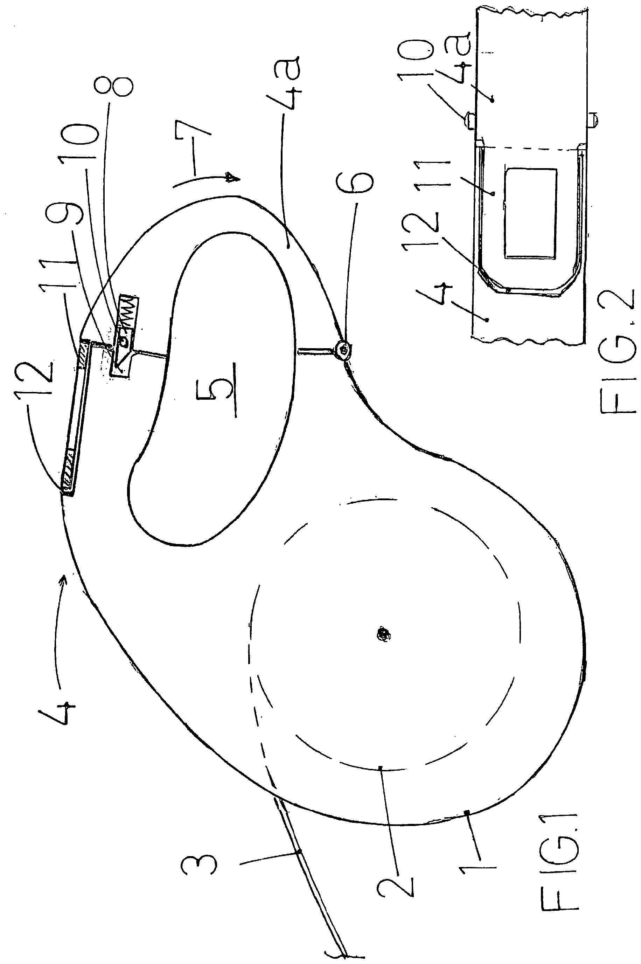

An seinem dem Schwenkgelenk 6 abgewandten Ende ist der Halteringbügel 4a mit einem Verriegelungselement in Form eines federbelasteten Schnappriegels 8 versehen, der in eine gegenüberliegende, am Gehäuse 1 befindliche Einschnappöffnung 9 eingreift und den Halteringbügel 4a in der in Figur 1 dargestellten Schließstellung fixiert. Der Schnappriegel 8 ist mit seitlich vorstehenden Griffelementen 10 versehen, mit denen die Verriegelung im Bedarfsfall von Hand gelöst werden kann.

Erfindungsgemäß ist der Halteringbügel 4a an seinem dem Schwenkgelenk 8 abgewandten Ende mit einer Schlosszunge 11 versehen, welche bei geöffnetem Haltering 4 in ein Kfz-Gurtschloss einsteckbar ist. Diese Schlosszunge 11 hat die bei Kfz-Gurtschlössern übliche Gestalt und liegt bei geschlossenem Haltering 4 in einer passenden Vertiefung 12 am äußeren Umfang des Halteringes 4, derart, dass sie nicht über den Außenumfang des Halteringes 4 vorsteht.

Das Schwenkgelenk 6 ist im Öffnungssinne federbelastet, sodass der schwenkbare Halteringbügel 4a nach Entriegelung des Schnappriegels 8 von allein in die Öffnungsstellung springt, in welcher sowohl die Eingriffsöffnung 5 für die Befestigung des Gehäuses 1 an beliebigen Befestigungspunkten als auch die Schlosszunge 11 für die Festlegung des Gehäuses an einem Gurtschloss im Kfz frei zugänglich sind. Zum Schließen des Halteringes 4 wird der Halteringbügel 4a gegen die Richtung des Pfeiles 7 und gegen die Federkraft das Schwenkgelenkes 6 in die in Figur 1 dargestellte Schließstellung gedrückt, bis der Schnappriegel 8 in die Einschnappöffnung 9 einschnappt und somit den Haltering 4 verriegelt.

Alternativ kann - gewissermaßen in kinematischer Umkehr - nach der Lehre der Erfindung die Schlosszunge 11 auch an dem dem freien Ende des Halteringbügels 4a zugewandten Abschnitt des Gehäuses 1 angeordnet sein. In diesem Fall wird natürlich die die Schlosszunge 11 aufnehmende Vertiefung im Halteringbügel 4a vorgesehen.

Abweichend vom in Figur 1 dargestellten Ausführungsbeispiel und ohne die erfinderische Funktion zu beeinträchtigen, kann der Halteringbügel 4a auch andersherum angeordnet werden, sodass das Gelenk 6 dort liegt, wo beim in Figur 1 dargestellten Ausführungsbeispiel die Verriegelung angeordnet ist.

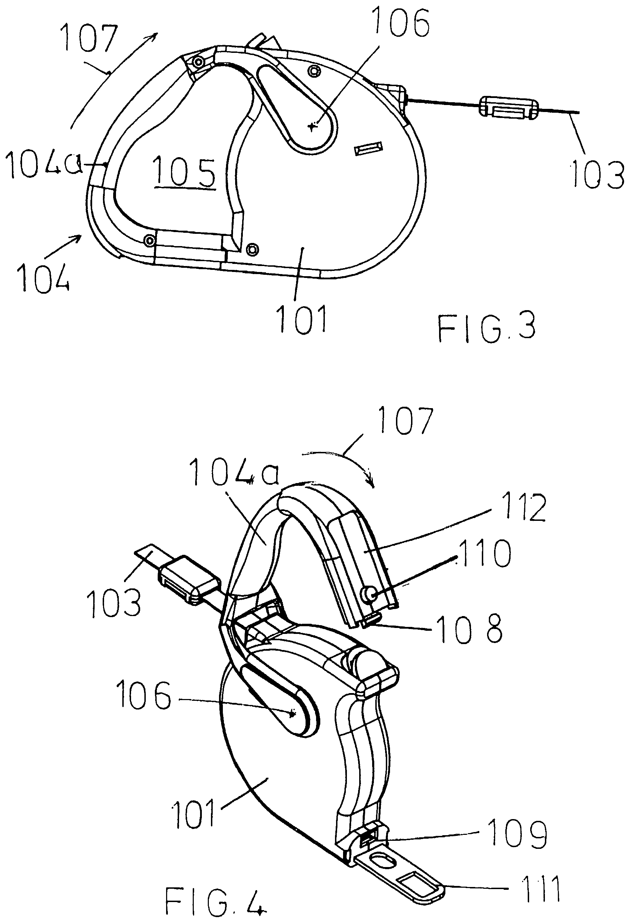

Ein solches Ausführungsbeispiel zeigen die Figuren 3 und 4. Dort ist das Gehäuse der Aufrollvorrichtung mit dem Bezugszeichen 101 bezeichnet. Im Inneren des Gehäuses 101 befindet sich eine in der Zeichnung nicht dargestellte Aufwickelrolle, auf welcher eine Hundeleine 103 auf gewickelt ist, die seitlich aus dem Gehäuse 101 herausgeführt ist.

Der Austrittsöffnung der Hundeleine 103 gegenüberliegend befindet sich an dem Gehäuse 101 ein Haltering 104, dessen Eingriffsöffnung 105 von dem Gehäuse 101 und einem Halteringbügel 104a umschlossen wird, der mittels eines Schwenkgelenkes 106 an dem Gehäuse 101 angelenkt ist. Um dieses Schwenkgelenk 106 herum ist der Halteringbügel 104a in Richtung des Pfeiles 107 in eine Öffnungsstellung verschwenkbar, in welcher die Eingriffsöffnung 100 und 1:05 Uhr Seite hin offen ist und eine Art Haken bildet, der zur Befestigung des Gehäuses 101 an beliebigen Befestigungspunkten verwendet werden kann.

An seinem dem Schwenkgelenk 106 abgewandten Ende ist der Halteringbügel 104a mit einem Verriegelungselement in Form eines federbelasteten Schnappriegels 108 versehen, der in eine gegenüberliegende, am Gehäuse 101 befindliche Einschnappöffnung 109 eingreift und den Halteringbügel 104a in der in Figur 3 dargestellten Schließstellung fixiert. Der Schnappriegel 108 ist mit einem Druckknopf 110 versehen, mit welchem auch hier die Verriegelung im Bedarfsfall von Hand gelöst werden kann.
Erfindungsgemäß ist bei diesem Ausführungsbeispiel der Erfindung das Gehäuse 101 an seinem dem freien Ende des Halteringbügels 104a zugewandten Abschnitt mit einer Schlosszunge 111 versehen, welche bei geöffnetem Haltering 104 (vergl. Figur 4) in ein Kfz-Gurtschloss einsteckbar ist. Diese Schlosszunge 111 hat die bei Kfz-Gurtschlössern übliche Gestalt und liegt bei geschlossenem Haltering 104 (vergl. Figur 3) platzsparend in einer passenden Vertiefung 112 im freien Ende des Halteringbügels 104a.

In ihrer Funktion und Handhabung entspricht die Aufrollvorrichtung gemäß den Figuren 3 und 4 voll und ganz der Aufrollvorrichtung gemäß den Figuren 1 und 2.

**Bezuaszeichenliste**

| | | | |
|---|---|---|---|
| 1 | Gehäuse | 101 | Gehäuse |
| 2 | Aufwickelrolle | | |
| 3 | Hundeleine | 103 | Hundeleine |
| 4 | Haltering | 104 | Haltering |
| 4a | Halteringbügel | 104a | Halteringbügel |
| 5 | Eingriffsöffnung | 105 | Eingriffsöffnung |
| 6 | Schwenkgelenk | 106 | Schwenkgelenk. |
| 7 | Pfeil | 107 | Pfeil |
| 8 | Schnappriegel | 108 | Schnappriegel |
| 9 | Einschnappöffnung | 109 | Einschnappöffnung |
| 10 | Griffelemente | 110 | Druckknopf |
| 11 | Schlosszunge | 111 | Schlosszunge |
| 12 | Vertiefung | 112 | Vertiefung |

## Patentansprüche

1. Aufrollvorrichtung für eine Tierleine, insbesondere für eine Hundeleine (3, 103), mit einem die Leine aufnehmenden Gehäuse (1, 101), welches mit einer Ausziehbegrenzungseinrichtung und mit einem eine Eingriffsöffnung (5, 105) aufweisenden Haltering (4, 104) versehen ist, der einen verschwenkbaren Halteringbügel (4a, 104a) aufweist, der über ein Schwenkgelenk (6, 106) mit dem Haltering (4, 104) verbunden ist, in seiner nicht verschwenkten Stellung die Eingriffsöffnung (5, 105) des Halteringes (4, 104) abschließt und in seiner verschwenkten Stellung die Eingriffsöffnung (5, 105) des Halteringes (4, 104) freigibt, **dadurch gekennzeichnet, dass** an dem Halteringbügel (4a, 104a) an dessen dem Schwenkgelenk (6, 106) abgewandten Ende oder an dem Haltering (4, 104) an dessen dem Halteringbügel (4a, 104a) zugewandten Ende eine Schlosszunge (11, 111) angeordnet ist, welche bei geöffnetem Haltering (4, 104) in ein Kfz-Gurtschloss einsteckbar ist.

2. Aufrollvorrichtung nach Anspruch 1, **dadurch gekennzeichnet, dass** die Schlosszunge (11, 111) in Umfangsrichtung des Halteringes (4, 104) verläuft und bei geschlossenem Haltering (4,104) in einer passenden Vertiefung (12, 112) des Halteringes (4, 104) bzw. des Halteringbügel (4a, 104a) liegt.

3. Aufrollvorrichtung nach den Ansprüchen 1 oder 2, **dadurch gekennzeichnet, dass** der Halteringbügel (4a, 104a) in Bezug auf die Eingriffsöffnung (5, 105) des Halteringes (4, 104) nach außen verschwenkbar ist.

4. Aufrollvorrichtung nach einem der Ansprüche 1-3, **dadurch gekennzeichnet, dass** der Halteringbügel (4a, 104a) an seinem dem Schwenkgelenk (6,106) abgewandten Ende mit einem Verriegelungselement (8, 108;10, 110) versehen ist, mit welchem der Halteringbügel (4a, 104a) in der Schließstellung fixierbar ist.

5. Aufrollvorrichtung nach Anspruch 4, **dadurch gekennzeichnet, dass** das den Halteringbügel (4a, 104a) tragende Gelenk (6, 106) als Federgelenk ausgebildet ist, welches den Halteringbügel (4a, 104a) elastisch in der Öffnungsstellung hält.

6. Aufrollvorrichtung nach den Ansprüchen 4 und 5, **dadurch gekennzeichnet, dass** das Verriegelungselement (8,108; 10, 110) am Ende des Halteringbügel (4a, 104a) als federbelasteter Schnappriegel (8, 108) ausgebildet ist, der mit Griffelementen (10) oder einem Druckknopf (110) zum Öffnen von Hand versehen ist.

## Claims

1. Winding device for an animal leash (3,103), in particular for a dog leash , comprising a housing (1,101) which houses the leash (3,103) and has a pull-out limiting device and a retaining ring (4,104) having an engagement opening (5,105), said retaining ring (4,104) having a pivot arm (4a, 104a) which is connected to the retaining ring (4,104) by means a pivot joint (6,106), closes the engagement opening (5,105) of the retaining ring (4,104) in its non-pivoted position and releases the engagement opening (5,105) of the retaining ring (4,104) in its pivoted position, **characterized in,**
**that** that a lock tongue (11,111) is arranged at the pivot arm (4a, 100a) at its end facing away from the pivot joint (6,106) or at the retaining ring (4,104) at its end facing the pivot arm (4a, 104a), which tongue (11,111) can be inserted into a motor vehicle belt buckle when the retaining ring (4,104) is open.

2. Winding device according to claim 1, **characterized in that** the lock tongue (11, 111) extends in the circumferential direction of the retaining ring (4, 104) and, when the retaining ring (4, 104) is closed, lies in a matching recess (12, 112) of the retaining ring (4, 104) or of the pivot arm(4a, 104a).

3. Winding device according to claims 1 or 2, **characterized in that** the the pivot arm (4a, 104a) can be pivoted outwards with respect to the engagement opening (5, 105) of the retaining ring (4, 104).

4. Winding device according to one of claims 1-3, **characterized in that** the pivot arm (4a, 104a) is provided at its end remote from the pivot joint (6, 106) with a locking element (8, 108; 10, 110) with which the pivot arm (4a, 104a) can be fixed in the closed position.

5. Winding device according to claim 4, **characterized in that** the joint (6, 106) supporting the pivot arm (4a, 104a) is designed as a spring joint which elastically holds t the pivot arm (4a, 104a) in the open position.

6. Winding device according to claims 4 and 5, **characterized in that** the locking element (8, 108; 10, 110) at the end of the pivot arm (4a, 104a) is designed as a spring-loaded snap bolt (8, 108) which is provided with grip elements (10) or a push button (110) for opening by hand.

## Revendications

1. Dispositif d'enroulement pour une laisse pour animaux, en particulier pour une laisse pour chiens (3, 103), avec un boîtier (1, 101) logeant la laisse, lequel est pourvu d'un système limiteur d'extraction et d'une bague de maintien (4, 104) présentant une ouverture de prise (5, 105), qui présente un étrier de bague de maintien (4a, 104a) pouvant pivoter, qui est relié à la bague de maintien (4, 104) par l'intermédiaire d'une articulation pivotante (6, 106), obture l'ouverture de prise (5, 105) de la bague de maintien (4, 104) dans sa position non pivotée et dégage, dans sa position pivotée, l'ouverture de prise (5, 105) de la bague de maintien (4, 104), **caractérisé en ce qu'**est disposée sur l'étrier de bague de maintien (4a, 104a) sur son extrémité opposée à l'articulation pivotante (6, 106) ou sur la bague de maintien (4, 104) sur son extrémité tournée vers l'étrier de bague de maintien (4a, 104a) une languette de boucle (11, 111), laquelle peut être enfichée dans une prise de ceinture de véhicule à moteur lorsque la bague de maintien (4, 104) est ouverte.

2. Dispositif d'enroulement selon la revendication 1, **caractérisé en ce que** la languette de boucle (11, 111) s'étend dans la direction périphérique de la bague de maintien (4, 104) et se situe, lorsque la bague de maintien (4, 104) est fermée, dans un renfoncement (12, 112) adapté de la bague de maintien (4, 104) ou de l'étrier de bague de maintien (4a, 104a).

3. Dispositif d'enroulement selon les revendications 1 ou 2, **caractérisé en ce que** l'étrier de bague de maintien (4a, 104a) peut être pivoté vers l'extérieur par rapport à l'ouverture de prise (5, 105) de la bague de maintien (4, 104).

4. Dispositif d'enroulement selon l'une quelconque des revendications 1 - 3, **caractérisé en ce que** l'étrier de bague de maintien (4a, 104a) est pourvu sur son extrémité opposée à l'articulation pivotante (6, 106) d'un élément de verrouillage (8, 108 ; 10, 110), avec lequel l'étrier de bague de maintien (4a, 104a) peut être bloqué dans la position de fermeture.

5. Dispositif d'enroulement selon la revendication 4, **caractérisé en ce que** l'articulation (6, 106) supportant l'étrier de bague de maintien (4a, 104a) est réalisée en tant qu'articulation sur ressorts, laquelle maintient de manière élastique dans la position d'ouverture l'étrier de bague de maintien (4a, 104a).

6. Dispositif d'enroulement selon les revendications 4 et 5, **caractérisé en ce que** l'élément de verrouillage (8, 108 ; 10, 110) est réalisé sur l'extrémité de l'étrier de bague de maintien (4a, 104a) en tant que verrou à déclic (8, 108) contraint à un ressort, qui est pourvu d'éléments de préhension (10) ou d'un bouton-poussoir (110) pour l'ouverture manuelle.
